# EUROPEAN PATENT SPECIFICATION

(11) **EP 2 649 690 B1**
(45) Date of publication and mention of the grant of the patent: **23.03.2016**
(21) Application number: 11801863.9
(22) Date of filing: 09.12.2011
(51) Int. Cl.: H02G 13/00, F03D 13/00

(54) **WIND TURBINE BLADE**
WINDTURBINENSCHAUFEL
PALE D'ÉOLIENNE

(43) Date of publication of application: 16.10.2013
(73) Proprietor: MITSUBISHI HEAVY INDUSTRIES, Ltd., Tokyo 108-8215 (JP); Euros Entwicklungsgesellschaft für Windkraftanlagen mbH, 13088 Berlin (DE)
(72) Inventor: FUJIOKA, Hideyasu, Tokyo 108-8215 (JP); ALWART, Jens, 13088 Berlin (DE); CREMER, Andreas, London, Greater London W1K 6WL (GB)
(74) Representative: RGTH
(86) International application number: PCT/JP2011/006902
(87) International publication number: WO 2013/084274

(56) References cited:
- EP-A1- 1 830 063
- EP-A2- 2 267 280
- US-A1- 2010 329 865

## Description

### Technical Field

The invention relates to a wind turbine blade for a wind turbine, wherein the wind turbine blade comprises a lightning protection system.

### Background Art

Due to their enormous size, wind turbines are highly prone to lightning strikes. In particular, the wind turbine blades being the component of the wind turbine reaching to the most distant point from the ground's surface and comprising weakly conductive material are at the highest risk of being struck by a lightning. In case of a lightning strike to the wind turbine blade, high currents in the surrounding material are generated, leading to excessive heating and damage of the material.

For the above reasons, wind turbines, in particular wind turbine blades, are usually provided with a lightning protection system to protect them from lightning strikes. A common lightning protection system comprises several lightning receptors located at the surface of the blade and a cable functioning as a down conductor. It is generally preferable to spread the current to several down conductors so that it is also known to utilize a meshwork of cables as a down conductor.

US 2010/0329865 A1 discloses a lightning protection system in the form of a meshwork of wires having two preferential directions, wherein the wires converge at the connection to the lightning receptor and at the root end. A disadvantage of the usage of such cable meshwork is that even though the current of a lightning strike is spread to multiple down conductors, the current in each conductor might still be very high, so that a significant heat can be built up in the conductors. This heat can damage the lightning protection system itself and the surrounding material of the wind turbine blade. Therefore, even though a reasonable down conduction can be achieved using a lightning protection mesh as in US 2010/0329865 A1, it is, however, preferable to spread the current of a lightning strike over an even broader cross section of conduction and at the same time protect the most crucial parts of the wind turbine blade from a direct lightning strike.

EP 2 267 280 A2 discloses an airfoil lightning protection system including a glass-reinforced fiber or carbon-reinforced wind turbine blade as well as a substantially planar sheet of conductive or semiconductive material being disposed internal to the blade tip region.

In EP 1830 063 A1 a lightning arrester system for a wind turbine blade is disclosed which replaces the standard main copper cable and which employs two strips of copper extending along the entire length of the beam of the blade.

This document shows the preamble of claim 1.

### [Summary of Invention]

It is the object of the present invention to provide an improved wind turbine blade with a lightning protection system. A further object of the invention is to provide a wind turbine blade with a lightning protection system which provides an improved protection and an enhanced conduction.

According to the present invention, the wind turbine blade has a tip end area and a root end area. To protect the blade from lightning strike, the wind turbine blade has a lightning protection system comprising at least one metal foil, extending in a continuous way from the tip end area to the root end area of the blade, i.e. in the longitudinal direction of the blade. Furthermore, the wind turbine blade comprises at least one spar cap extending from the tip end area to the root end area of the blade, wherein the metal foil extends along the longitudinal direction of the blade and is disposed outside from the spar cap and in radial direction behind the spar cap to protect it from a direct stroke of lightning. In addition, the wind turbine blade comprises an outer blade layer, wherein said outer blade layer extends between the metal foil and the spar cap, and wherein the outer blade layer comprises at least one equipotentialization member to provide an electrical connection between said metal foil and said spar cap.

The term "metal foil" refers to a piece of metal whose thickness is significantly smaller than its longitudinal and transverse dimensions. The metal foil according to the present invention is made of one integral piece of metal. The metal foil can, for instance, be produced by deep drawing or rolling of one piece of metal. In particular, the metal foil is not a mesh of single wires or fibers. Preferably, the metal foil is formed as a strip which is arranged substantially parallel to the longitudinal direction of the blade. In a further preferred embodiment of the invention, the strip has a constant width.

Due to the arrangement of the metal foil from the tip end area to the root end area of the blade, the metal foil can function as a down conductor along the length of the blade. As the metal foil extends along the longitudinal direction of the blade, it can conduct the current of a lightning strike to the root end area of the blade independently of the position of the lightning strike. In addition, the metal foil is located in proximity, preferably in close proximity, to the outer surface of the blade so that it can directly function as a lightning receptor. In particular, the metal foil is located in the radial outer 10 percent of the blade wall with respect to the blade wall thickness. Preferably, the metal foil is only covered by a thin protective layer in the outer direction of the blade.

Preferably, the lightning protection system of the wind turbine blade comprises a plurality of metal foils. The lightning protection system preferably consists of one metal foil located along the suction side of the blade and one metal foil located along the pressure side of the blade. In a particularly preferred embodiment, the lightning protection system comprises two metal foils on the suction side and the pressure side of the blade respectively.

In a preferred embodiment, the metal foil comprises a plurality of apertures, which in particular all have the same aperture size. The size of the apertures is preferably sufficiently small so that the possibility of a lightning strike to the blade through an aperture instead of a strike to the metal foil can be ruled out. Preferably, the size of the apertures amounts between 0.5 mm and 3 mm, especially preferred between 1 mm and 2 mm, so that foils with a fine net structure can be used. The aperture size is defined as the largest possible distance between two opposing aperture sides. In a particular preferred embodiment, the size of the apertures amounts to less than 10 mm, preferably less than 5 mm and particularly preferably less than 2 mm.

In a further embodiment, the apertures are arranged within the metal foil in such a way that a net structure of the metal foil is defined. The metal foil therefore comprises webs of continuous metal foil running in two preferential directions. In contrast to a lightning protection mesh as it is known in prior art, the metal foil does not consist of separate conductors which are woven in order to form a meshwork. Preferably, the apertures are arranged in such a way that a regular net structure of the metal foil is formed.

A certain percentage of the area of the apertures compared to the total area of the metal foil should not be exceeded as the down conduction requires a minimal cross section of conducting material.

Preferably, the metal foil is produced by the steps of slotting, drawing and rolling of the metal foil. Alternatively, it is also possible to punch a plurality of apertures into an already rolled metal foil. In both ways, the metal foil consists of one continuous piece of metal.

In a further embodiment, the net structure of the metal foil is oriented in a diagonal way to the longitudinal direction of the blade. The term diagonal is to be understood that both preferential directions of the net structure enclose an angle with the longitudinal direction of the blade which is between 0 degrees and 90 degrees, preferably between 20 degrees and 80 degrees and especially preferably between 50 degrees and 70 degrees. In this way, the foil does not experience the full strain of the blade which is mostly stressed along its longitudinal direction. Therefore, the stress and the correlated fatigue load acting on the net structure of the metal foil will be much lower using the above described diagonal orientation.

According to a further embodiment of the invention, the material of the metal foil comprises copper. Preferably, the metal foil is entirely made of copper. Alternatively, other metals with a high conductivity can be used.

Preferably, the at least one spar cap extends substantially parallel to the longitudinal direction of the blade. The spar cap preferably comprises carbon fibers which as a conductive material are prone to a lightning strike. In order to protect the spar cap from a direct lightning strike, the metal foil is preferably disposed outside from the spar cap and in radial direction behind the spar cap along the entire length of the spar cap so that a lightning strike to the spar cap can successfully be prevented. By radial direction "thickness direction" is meant, which corresponds to a transverse direction or cross direction of a section of the blade wall wherein the opposite blade wall section is not included. In particular, the thickness direction is substantially perpendicular to a center line of the blade wall section. In a preferred embodiment, the metal foil is wider than the spar cap in cross direction of the blade, preferably at least one and a half times as wide as the spar cap and especially preferably at least twice as wide. In a particularly preferred embodiment, in case of two spar caps on each side, the lightning protection system comprises two metal foils on the suction side and two metal foils on the pressure side of the blade respectively. Preferably, the two metal foils on each side overlap with each other, at least in the tip end area of the blade. In an especially preferred embodiment of the invention, the metal foils have approximately the same width as the base plate at the tip end area. Starting from the tip end area toward the root end area the metal foils each follow an oblique course compared to the longitudinal direction of the blade respectively so that the metal foils increasingly diverge from each other towards the root end area of the blade. The metal foils are adapted in such a way that despite their oblique arrangement, the metal foils are disposed outside from and in radial direction behind the spar caps, which run parallel to the longitudinal direction of the blade, along the entire length of the spar caps. This is achieved by means of metal foils which are substantially wider than the width of the spar caps.

According to another embodiment of the invention, the wind turbine blade comprises a plurality of metal foils which are electrically connected amongst each other to avoid a potential difference and therefore an arc-over between the metal foils. The connection between the metal foils is preferably achieved by further metal foil sections connecting the plurality of metal foils with each other. The electrical connection between the metal foils extending in the longitudinal direction of the blade is preferably oriented in the transverse direction, especially preferred in the circumferential direction, of the blade. It is also preferable to connect the substantially parallel metal foils at various positions along their length, preferably at constant intervals, so that a potential difference between the metal foils cannot be build up at any position of the metal foil. In the case of two metal foils on each side of the blade, the metal foils of one side can be connected to each other by means of other metal foil sections. Preferably, at least one metal foil of one side is connected to at least one metal foil of the opposite side of the blade. In a further preferred embodiment, the connecting metal foil sections extend along the entire circumference of the blade, therefore connecting all of the metal foils running in the longitudinal direction of the blade.

In particular, the blade comprises two spar caps on its suction side and pressure side respectively. Furthermore, the blade comprises one metal foil for each spar cap, in this case two metal foils on each side, wherein the metal foils of each blade side are electrically connected to each other.

According to the invention, the blade comprises an outer blade layer, preferably a glass laminate layer. The outer blade layer preferably covers the entire surface of the blade. The spar cap is located directly underneath the outer blade layer. The metal foil is at least arranged at the outer surface of the outer blade layer in such areas where the outer blade layer covers the spar caps so that the outer blade layer extends between the metal foil and the spar cap. The net structure of the metal foil ensures a good connection between the metal foil and the outer blade layer. In another preferred embodiment, the metal foil is arranged at the entire outer surface of the outer blade layer so that the metal foil preferably encloses the surface of the entire blade, either including or excluding the tip end area of the blade.

According to the invention, the outer blade layer comprises at least one equipotentialization member for establishing an equal potential between the spar cap and the metal foil in case of a lightning strike. The spar cap preferably comprises carbon fibers which as a conductive material must be kept at equipotential with the metal foil. In case of a lightning strike, the current travelling through the metal foil on its way of down conduction would cause induction in the carbon reinforced material of the spar cap. Leaving the carbon fiber reinforced material of the spar cap insulated would result in a significant difference in potential between the spar cap and the metal foil. The potential difference would give rise to a high risk of an arc-over between the metal foil and the spar cap which would significantly damage the blade. As the equipotentialization member connects the spar cap and the metal foil electrically, an equal potential is generated so that there is no risk of an arc-over and the correlated damages to the blade. Preferably, the equipotentialization member comprises conductive fibers, such as e.g. carbon fibers, being orientated in thickness direction or not in thickness direction of the blade. Preferably, the equipotentialization member comprises carbon patches for establishing an electrical connection between the spar cap and the metal foil.

In a preferred embodiment, the metal foil being located at the outer surface of the outer blade layer is covered by a protective layer such as paint and/or a very thin glass fleece layer. The metal foil is therefore protected from environmental influences, such as corrosion, or physical damage, such as scars. At the same time, the protective layer is sufficiently thin so that the metal foil can still function as a direct lightning receptor.

In a further preferred embodiment, the at least one equipotentialization member extends along the longitudinal direction of the blade, preferably along the entire length of the spar cap. This can be achieved by a slit in the outer blade layer along the longitudinal direction of the blade and filling the slit with a conductive material. Alternatively, multiple equipotentialization members are arranged along the longitudinal direction of the blade, also preferably along the entire length of the spar cap. Both above described alternative embodiments ensure the provision of an equal potential of spar cap and metal foil regardless of the exact location of the lightning strike to the blade.

According to a further embodiment, the at least one equipotentialization member comprises a continuous electrical conductor for providing an electrical connection between the metal foil and the spar cap. To provide an electrical connection, the continuous electrical conductor has a first contact area with the metal foil and a second contact area with the spar cap. Therefore, the spar cap and the metal foil are in direct electrical connection to each other by means of the continuous electrical conductor. In particular, the connection runs preferably substantially in the cross direction of the blade without any disturbing isolating layers running in the longitudinal direction of the blade which the current would have to pass, such as e.g. dried resin. Preferably, the continuous electrical conductor is wrapped around a core material in such a way that it has a contact area with the spar cap and the metal foil respectively. The core material can be a conductive or a nonconductive material. The continuous electrical conductor can, for instance, comprise carbon fiber reinforced plastic, metal foil, metal mesh or metal plates.

In another embodiment of the invention, the wind turbine blade comprises at least one metallic lightning receptor which is located at the tip end area of the blade or on the blade surface. The metallic lightning receptor is electrically connected to the metal foil. Preferably, the metallic lightning receptor comprises a metal plate. In this case, the metal foil is preferably connected to the metal plate. In a preferred embodiment, the metal foil overlaps with the metal plate of the metallic lightning receptor to provide an electrical connection.

In a further preferred embodiment, the metallic lightning receptor is a disk receptor, which is embedded within the blade wall at the blade tip end area and protrudes slightly from the blade wall to the outside of the blade. Preferably, the metallic lightning receptor comprises two disk receptors, which are located at opposite sides of the blade. The two disk receptors are electrically and mechanically connected by connection means, in particular by a metal bolt, and preferably comprise two metal plates which are each connected to a metal foil, preferably by metal rivets.

In another embodiment of the invention, the wind turbine blade comprises a base plate located inside the blade, on which a plurality of disk receptors is mounted. The base plate preferably consists of copper. Preferably, the disk receptors are arranged at the suction side and the pressure side of the blade and attached by bolts to the base plate. In particular, three disk receptors are placed on the suction side and the pressure side of the wind turbine blade respectively. The base plate functions as an attachment means for the disk receptors. At the same time, the base plate can function as an electrical connection between the disk receptors and the metal foil. For this purpose, the metal foil is preferably located between the base plate and another plate which are connected to each other by means of rivets. Preferably, the base plate and the other plate consist of copper.

In a preferred embodiment of the invention, the wind turbine blade comprises a rod receptor, which is located at the tip end area of the blade. Preferably, the rod receptor is embedded within the blade in a cut out of the blade wall. In a preferred embodiment, the rod receptor is connected to a base plate which is located within the blade by connection means, preferably by a thread and/or a locking pin. In another preferred embodiment, the blade comprises a solid metallic blade tip which is connected to the metal foil. Preferably, the solid metallic blade tip is replaceable and can be placed on the blade tip in order to function as a lightning receptor.

In another embodiment of the invention, the tip end area of the blade is filled with a material with a high dielectric coefficient. The dielectric coefficient of the filling material should at least be higher than the dielectric coefficient of air so that the blade tip end area is insulated by means of the filling material, avoiding lightning strikes to the tip end area of the blade.

In another preferred embodiment, the metal foil is electrically connected to a further down conductor of a wind turbine at the root end area of the blade. Preferably, the metal foil is connected with metal plates to a metal ring, wherein the metal ring acts as an interconnection to the further down conductor system of the wind turbine to the earth.

### Brief Description of Drawings

The invention will be described below with reference to the following figures which show in schematic representation
[fig.1]Figure 1 is a side view of a wind turbine blade with a lightning protection system;
[fig.2A]Figure 2A is a longitudinal sectional view of the blade tip end area of a blade;
[fig.2B]Figure 2B is a longitudinal sectional view of the blade tip end area of a blade;
[fig.3]Figure 3 is a longitudinal sectional view of a blade tip end area of a blade;
[fig.4]Figure 4 is a longitudinal sectional view of an equipotentialization member; and
[fig.5]Figure 5 is a cross sectional view of a blade.

### Description of Embodiments

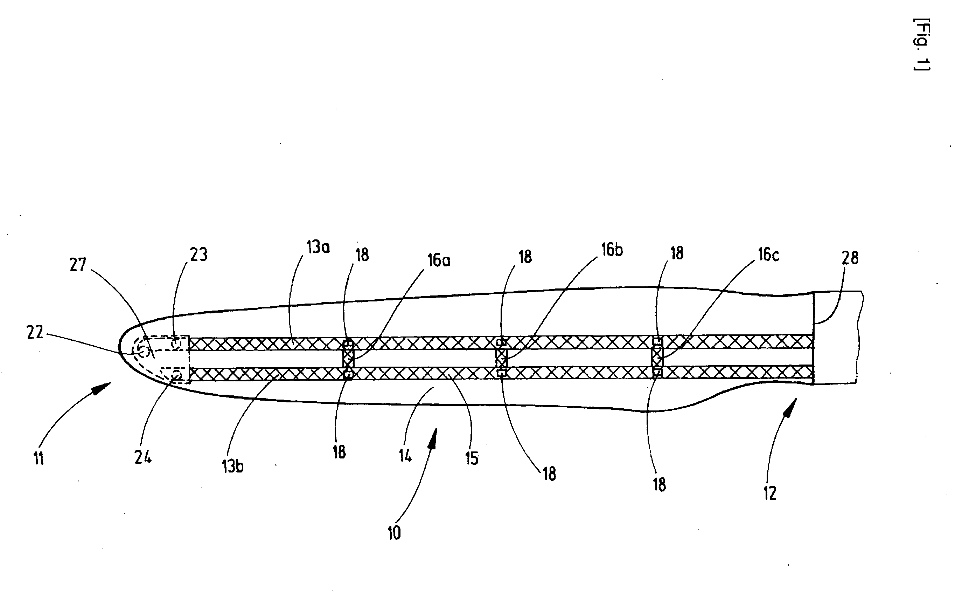

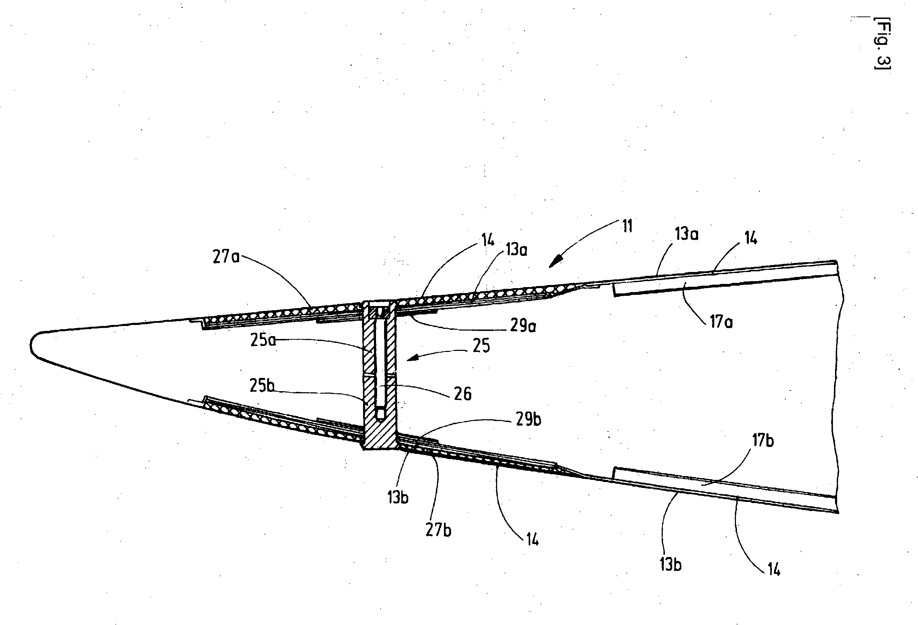

Figure 1 shows a side view of a wind turbine blade 10 comprising a tip end area 11 and the root end area 12. The wind turbine blade 10 further has a lightning protection system comprising two metal foils 13a, 13b out of copper which extend continuously from the tip end area 11 of the blade 10 to the root end area 12 of the blade 10 along its longitudinal direction. The metal foils 13a, 13b are arranged at the outside of the outer blade layer 14 of the blade 10 and in radial direction behind spar caps 17a, 17b (see figure 3) which are located underneath the outer blade layer 14 except for the tip end area 11 of the blade 10. In the tip end area 11 of the blade 10, the metal foils 13a, 13b are arranged inside the blade 10 so that they are shown by a broken line. The metal foils 13a, 13b are only covered by a thin protective layer so that they can function as a receptor of a stroke of lightning. In this side view, the thin protective layer which usually covers the metal foils is not shown.

Outside of the tip end area 11, the metal foils 13a, 13b which are formed as strips with a constant width are arranged substantially parallel to the longitudinal direction of the blade. On the other side of the blade which is not shown in this figure two more metal foils are arranged so that the entire blade comprises two metal foils on each side and therefore four metal foils in total.

The metal foils 13a, 13b comprise a plurality of apertures 15 which define a net structure of the metal foils 13a, 13b which is oriented diagonally to the longitudinal direction of the blade 10. In order to keep equal potential between the metal foils 13a, 13b, they are connected amongst each other in a transverse direction of the blade 10 by three connecting metal foil sections 16a, 16b, 16c which are arranged at equal intervals. The connecting metal foil sections 16a, 16b, 16c are arranged perpendicular to the metal foils 13a, 13b. The lightning protection system of the wind turbine blade 10 further comprises a plurality of equipotentialization members 18 to ensure equipotentialization between the metal foils 13a, 13b and the spar caps. The six equipotentialization members 18 are arranged at the connection points between the metal foils 13a, 13b and the connecting metal foil sections 16a, 16b, 16c so that three pairs of them are arranged at equal intervals along the longitudinal direction of the blade 10.

At the root end area 12 of the blade 10 the metal foils 13a, 13b are connected to a steel ring 28 which acts as an interconnector for a down conduction system of a wind turbine so that the metal foils 13a, 13b can also function as a down conductor to the root end area 12 of the blade 10. From the root end area 12 to the tip end area 11 of the blade 10, the metal foils are arranged outside the outer blade layer 14, whereas at the tip end area 11 the metal foils extend to the inside of the blade 10 below the outer blade layer 14 and are connected to a base plate 27. Since the base plate 27 is located inside the blade tip end area 11, it is represented by a broken line in figure 1. Three metallic lightning receptors 22, 23, 24 are mounted to the base plate 27, said receptors slightly protruding from the outer blade layer 14 to the outside of the blade 10.

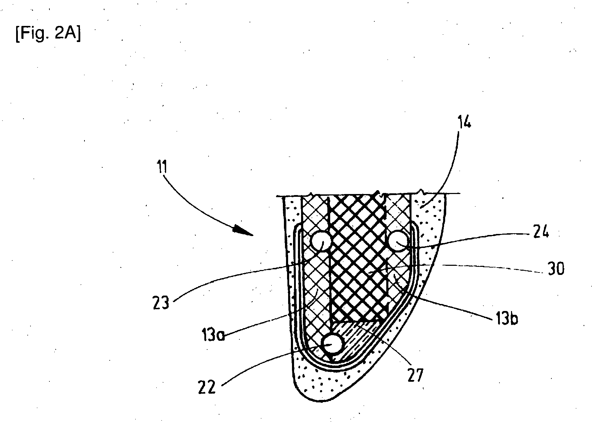

In Figure 2A a longitudinal sectional view of the tip end area 11 of a blade 10 is shown. The metal foils 13a, 13b which are arranged inside the blade 10 in its tip end area 11, i.e. inside of the base plate 27, overlap with the base plate 27 which is also located inside the blade 10. The base plate 27 functions as an attachment means for the metallic lightning receptors 22, 23, 24 and simultaneously as an electrical connection between the metallic lightning receptors 22, 23, 24 and the metal foils 13a, 13b. The metal foils 13a, 13b overlap with each other in the overlapping area 30.

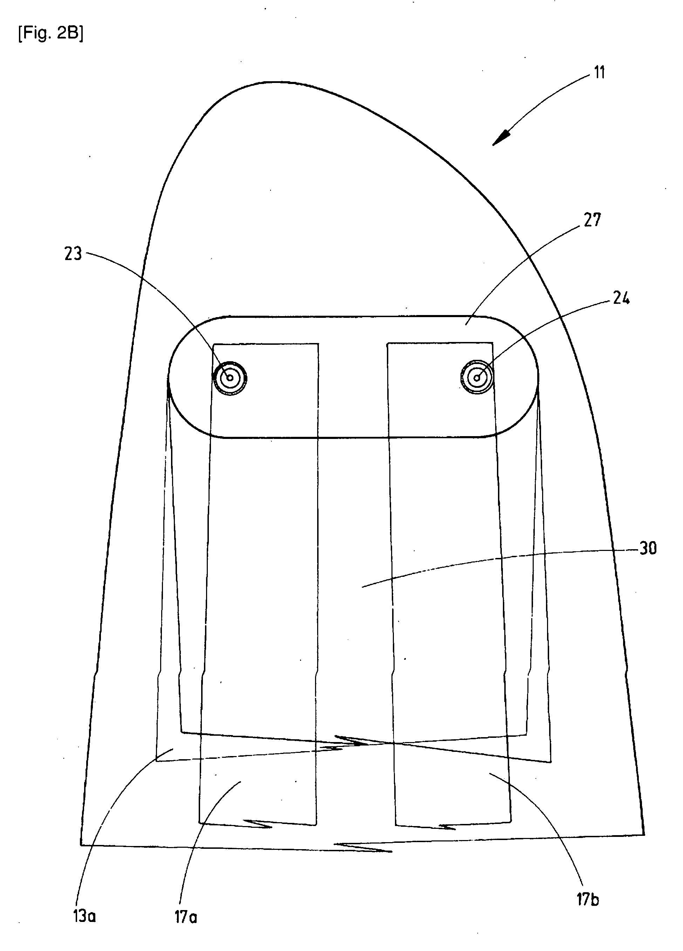

Figure 2B shows a longitudinal sectional view of the tip end area 11 of another blade 10. Two metallic lightning receptors 23, 24 which are disk receptors are mounted on the base plate 27 out of copper. Two metal foils 13a, 13b are arranged at the base plate 27 extending towards the root end area 12 of the blade 10. The metal foils 13a, 13b have a width which corresponds to the length of the oval-shaped base plate 27. Therefore, the metal foils 13a, 13b overlap in the area 30. Extending from the base plate 27 towards the end area 12 of the blade 10, the metal foils 13a, 13b slightly diverge from each other.

Figure 3 shows another longitudinal sectional view of the tip end area 11 of a blade 10 which is rotated by approximately 90 degrees with respect to the longitudinal section of figure 2A. The metallic lightning receptor 25 consists of two disk receptors 25a, 25b which are embedded inside the blade 10 and are mounted on a base plate 27a, 27b at opposite sides of the blade 10 respectively. The disk receptors 25a, 25b comprise a metal plate 29a, 29b respectively. The disk receptors 25a, 25b are connected by a bolt 26 serving as an attachment as well as an electrical connection. The disk receptors 25a, 25b protrude out of the outer blade layer 14 to the outside of the blade 10.

At the side of the blade 10 at which the disk receptor 25a is located, the metal foil 13a is arranged, while at the opposite side of the blade 10 at which the disk receptor 25b is situated another metal foil 13b is arranged. The metal foils 13a, 13b are arranged at the inner side of the base plates 27a, 27b in the tip end area 11 of the blade 10, wherein the base plates 27a, 27b function as a connection between the disk receptors 25a, 25b and the metal foils 13a, 13b. The metal plates 29a, 29b of the disk receptors 25a, 25b are located at the inner side of the metal foils 13a, 13b, so that the metal foils 13a, 13b are arranged between the metal plates 29a, 29b and the base plates 27a, 27b in this area of the blade 10.

Starting from the tip end area 11 towards the root end area 12, the metal foils 13a, 13b are first arranged inside the blade 10 but break through the outer blade layer 14 at the end of the tip end area 11. As a result, the metal foils 13a, 13b are arranged outside the outer blade layer 14 which extends between the metal foils 13a, 13b and the spar caps 17a, 17b outside of the tip end area 11 of the blade 10.

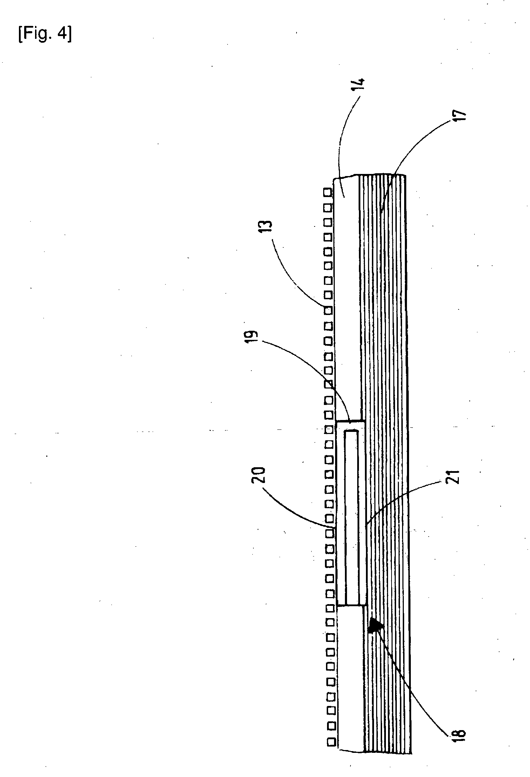

In Figure 4 a longitudinal sectional view of an equipotentialization member 18 between the metal foil 13 and the spar cap 17 is shown. The equipotentialization member is an aperture in the outer blade layer 14. In order to provide an electrical connection between the metal foil 13 and the spar cap 17, the equipotentialization member 18 comprises a continuous electrical conductor 19. The continuous electrical conductor 19 being a copper mesh in this embodiment has a first contact area 20 with the metal foil 13 and a second contact area 21 with the spar cap 17. The first contact area 20 and the second contact area 21 are in direct electrical connection by means of the continuous electrical conductor 19 so that an equal potential between the spar cap 17 and the metal foil 13 is achieved.

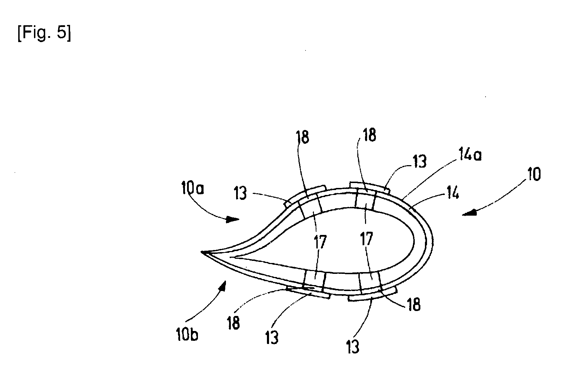

Figure 5 shows a cross sectional view of a blade 10 having a pressure side 10a and a suction side 10b. The blade 10 further comprises two spar caps 17 on each side of the blade 10 and an outer blade layer 14 extending all around the circumference of the blade 10. Two metal foils 13 are arranged at each side of the blade 10, namely the pressure side 10a and the suction side 10b. The metal foils 13 are disposed at the outer surface 14a of the outer blade layer 14. The metal foils are located outside from the spar cap 17 and in radial direction behind the spar cap 17 in order to protect it from a direct stroke of lightning. The metal foils 13 are protected by a thin layer which is not shown in this figure. The metal foils 13 have a width which is greater than the width of the spar cap 17 and overlap the spar cap 17 to each side. Between the spar caps 17 and the metal foils 13 the outer blade layer 14 comprises equipotentialization members 18 in order to provide an electrical connection between the metal foils 13 and the spar caps 17.

## Claims

1. A wind turbine blade (10) for a wind turbine, having
a tip end area (11) and a root end area (12), and
a lightning protection system,
said lightning protection system comprising at least one metal foil (13, 13a, 13b, 13c),
wherein said metal foil (13, 13a, 13b, 13c) extends continuously from the tip end area (11) to the root end area (12) of the blade (10), and
wherein the metal foil (13, 13a, 13b, 13c) is arranged in proximity to the outer surface of the blade (10),
so that the metal foil (13, 13a, 13b, 13c) is adapted to function as a receptor of a stroke of lightning and as a down conductor,
wherein the wind turbine blade (10) comprises at least one spar cap (17, 17a, 17b) extending from the tip end area (11) to the root end area (12) of the blade (10), wherein the metal foil (13, 13a, 13b, 13c) extends along the longitudinal direction of the blade (10), and wherein the metal foil (13, 13a, 13b, 13c) is disposed outside from the spar cap (17, 17a, 17b) and in radial direction behind the spar cap (17, 17a, 17b) to protect the spar cap (17, 17a, 17b) from a direct stroke of lightning,
**characterized in that** the wind turbine blade (10) comprises an outer blade layer (14),
wherein said outer blade layer (14) extends between the metal foil (13, 13a, 13b, 13c) and the spar cap (17, 17a, 17b), and
wherein the outer blade layer (14) comprises at least one equipotentialization member (18) to provide an electrical connection between said metal foil (13, 13a, 13b, 13c) and said spar cap (17, 17a, 17b).

2. The wind turbine blade (10) according to claim 1,
wherein the at least one metal foil (13, 13a, 13b, 13c) comprises a plurality of apertures (15).

3. The wind turbine blade (10) according to claim 2,
wherein the apertures (15) define a net structure of the metal foil (13, 13a, 13b, 13c).

4. The wind turbine blade (10) according to claim 3,
wherein the net structure of the metal foil (13, 13a, 13b, 13c) is oriented diagonally to the longitudinal direction of the blade (10).

5. The wind turbine blade (10) according to claim 1,
wherein the material of the metal foil (13, 13a, 13b, 13c) comprises copper.

6. The wind turbine blade (10) according to claim 1,
wherein a plurality of metal foils (13, 13a, 13b, 13c) extends along the longitudinal direction of the blade (10), and
wherein said plurality of metal foils (13, 13a, 13b, 13c) are electrically connected amongst each other in a transverse direction of the blade (10) to keep equipotential between the metal foils (13, 13a, 13b, 13c).

7. The wind turbine blade (10) according to claim 1,
wherein the at least one equipotentialization member (18) extends in the longitudinal direction of the blade (10) for substantially the length of the spar cap (17, 17a, 17b).

8. The wind turbine blade (10) according to claim 1,
wherein a plurality of equipotentialization members (18) is arranged along the longitudinal direction of the blade (10).

9. The wind turbine blade (10) according to claim 1,
wherein the at least one equipotentialization member (18) comprises a continuous electrical conductor (19) for providing the electrical connection between metal foil (13, 13a, 13b, 13c) and spar cap (17, 17a, 17b), and
wherein said continuous electrical conductor (19) has a first contact area (20) with the metal foil (13, 13a, 13b, 13c) and a second contact area (21) with the spar cap (17, 17a, 17b),
the first contact area (20) and the second contact area (21) being in direct electrical connection by means of the continuous electrical conductor (19).

10. The wind turbine blade (10) according to claim 1, comprising:
at least one metallic lightning receptor (22, 23, 24),
wherein said at least one metallic lightning receptor (22, 23, 24) is located at the blade tip end area (11) or on the blade surface, and
wherein the metal foil (13, 13a, 13b, 13c) is electrically connected to said metallic lightning receptor (22, 23, 24).

11. The wind turbine blade (10) according to claim 10,
wherein the metallic lightning receptor (22, 23, 24) comprises a disk receptor (25a, 25b),
said disk receptor (25a, 25b) being located at the blade tip end area (11) and being embedded in the blade (10).

12. The wind turbine blade (10) according to claim 10,
wherein the metallic lightning receptor (22, 23, 24) comprises two opposite disk receptors (25a, 25b), said two opposite disk receptors (25a, 25b) being electrically and mechanically connected by connection means (26).

13. The wind turbine blade (10) according to claim 10, comprising:
a base plate (27),
wherein said base plate (27) is located inside the blade (10), and
wherein a plurality of disk receptors (25a, 25b) are mounted on the base plate (27).

14. The wind turbine blade (10) according to claim 10,
wherein the metallic lightning receptor comprises a rod receptor, said rod receptor being located at the tip end area (11) of the blade (10).

15. The wind turbine blade (10) according to claim 10,
wherein the metallic lightning receptor comprises a solid metallic blade tip.

16. The wind turbine blade (10) according to claim 1,
wherein the tip end area (11) of the blade (10) is filled with a material with a high dielectric coefficient.

17. The wind turbine blade (10) according to claim 1,
wherein the metal foil (13, 13a, 13b, 13c) is electrically connected to a further down conductor of a wind turbine at the root end area (12) of the blade (10).

## Patentansprüche

1. Windturbinenblatt (10) für eine Windturbine mit
einem Spitzen-Ende (11) und einem Wurzelende (12), und
ein Blitzschutzsystem,
wobei das Blitzschutzsystem mindestens eine Metallfolie (13, 13a, 13b, 13c) umfasst,
wobei sich die Metallfolie (13, 13a, 13b, 13c) kontinuierlich vom Spitzen-Ende (11) zum Wurzelende (12) des Turbinenblattes (10) erstreckt, und
wobei die Metallfolie (13, 13a, 13b, 13c) in der Nähe der Außenfläche des Turbinenblattes (10) angeordnet ist,
so dass die Metallfolie (13, 13a, 13b, 13c) geeignet ist, als Empfänger eines Blitzschlages und als Ableitung zu funktionieren,
wobei das Windturbinenblatt (10) mindestens einen Holmgurt (17, 17a, 17b) umfasst, der sich vom Spitzen-Ende (11) zum Wurzelende (12) des Turbinenblattes (10) erstreckt, wobei sich die Metallfolie (13, 13a, 13b, 13c) in Längsrichtung des Turbinenblattes (10) erstreckt, und wobei die Metallfolie (13, 13a, 13b, 13c) außerhalb des Holmgurtes (17, 17a, 17b) und in radialer Richtung hinter dem Holmgurt (17, 17a, 17b) angebracht ist, um den Holmgurt (17, 17a, 17b) vor einem direkten Blitzeinschlag zu schützen,
**dadurch gekennzeichnet, dass** das Windturbinenblatt (10) eine äußere Turbinenblattschicht (14) umfasst,
wobei sich die Turbinenblattschicht (14) zwischen der Metallfolie (13, 13a, 13b, 13c) und dem Holmgurt (17, 17a, 17b) erstreckt, und
wobei die äußere Turbinenblattschicht (14) mindestens ein Spannungsausgleichselement (18) umfasst, um eine elektrische Verbindung zwischen der Metallfolie (13, 13a, 13b, 13c) und dem Holmgurt (17, 17a, 17b) bereitzustellen.

2. Windturbinenblatt (10) gemäß Anspruch 1,
wobei die mindestens eine Metallfolie (13, 13a, 13b, 13c) eine Vielzahl von Öffnungen (15) umfasst.

3. Windturbinenblatt (10) gemäß Anspruch 2,
wobei die Öffnungen (15) eine Netzstruktur der Metallfolie (13, 13a, 13b, 13c) definieren.

4. Windturbinenblatt (10) gemäß Anspruch 3,
wobei die Netzstruktur der Metallfolie (13, 13a, 13b, 13c) diagonal zur Längsrichtung des Turbinenblatts (10) ausgerichtet ist.

5. Windturbinenblatt (10) nach Anspruch 1,
wobei das Material der Metallfolie (13, 13a, 13b, 13c) Kupfer umfasst.

6. Windturbinenblatt (10) gemäß Anspruch 1,
wobei sich eine Vielzahl von Metallfolien (13, 13a, 13b, 13c) entlang der Längsrichtung des Turbinenblatts (10) erstreckt, und
wobei die Vielzahl von Metallfolien (13, 13a, 13b, 13c) untereinander in Vorschubrichtung des Turbinenblatts (10) elektrisch verbunden ist, um einen Spannungsausgleich zwischen den Metallfolien (13, 13a, 13b, 13c) zu erhalten.

7. Windturbinenblatt (10) gemäß Anspruch 1,
wobei sich das mindestens eine Spannungsausgleichselement (18) in Längsrichtung des Turbinenblatts (10) im Wesentlichen über die Länge des Holmgurtes (17, 17a, 17b) erstreckt.

8. Windturbinenblatt (10) gemäß Anspruch 1,
wobei eine Vielzahl von Spannungsausgleichselementen (18) entlang der Längsrichtung des Turbinenblatts (10) angeordnet ist.

9. Windturbinenblatt (10) gemäß Anspruch 1,
wobei das mindestens eine Spannungsausgleichselement (18) einen kontinuierlichen elektrischen Leiter (19) zur Bereitstellung der elektrischen Verbindung zwischen Metallfolie (13, 13a, 13b, 13c) und Holmgurt (17, 17a, 17b) umfasst, und
wobei der kontinuierliche elektrische Leiter (19) eine erste Kontaktfläche (20) mit der Metallfolie (13, 13a, 13b, 13c) und eine zweite Kontaktfläche (21) mit dem Holmgurt (17, 17a, 17b) hat,
wobei die erste Kontaktfläche (20) und die zweite Kontaktfläche (21) durch den kontinuierlichen elektrischen Leiter in direkter elektrischer Verbindung stehen.

10. Windturbinenblatt (10) nach Anspruch 1, umfassend:
mindestens einen metallischen Blitzempfänger (22, 23, 24),
wobei der mindestens eine metallische Blitzempfänger (22, 23, 24) im Spitzen-Ende (11) des Turbinenblattes oder auf der Blattoberfläche angeordnet ist, und
wobei die Metallfolie (13, 13a, 13b, 13c) mit dem metallischen Blitzempfänger (22, 23, 24) elektrisch verbunden ist.

11. Windturbinenblatt (10) nach Anspruch 10,
wobei der metallische Blitzempfänger (22, 23, 24) einen Scheibenempfänger (25a, 25b) umfasst,
wobei der Scheibenempfänger (25a, 25b) im Spitzen-Ende (11) des Turbinenblatts angeordnet ist und im Turbinenblatt (10) eingebettet ist.

12. Windturbinenblatt (10) gemäß Anspruch 10,
wobei der metallische Blitzempfänger (22, 23, 24) zwei gegenüberliegende Scheibenempfänger (25a, 25b) umfasst, wobei die zwei gegenüberliegenden Scheibenempfänger durch Verbindungsmittel elektrisch und mechanisch verbunden sind.

13. Windturbinenblatt (10) gemäß Anspruch 10, umfassend:
eine Grundplatte (27),
wobei sich die Grundplatte (27) im Turbinenblatt (10) befindet, und
wobei eine Vielzahl von Scheibenempfängern (25a, 25b) auf der Grundplatte (27) montiert ist.

14. Windturbinenblatt (10) gemäß Anspruch 10,
wobei der metallische Blitzempfänger einen Stabempfänger umfasst, der sich im Spitzen-Ende (11) des Turbinenblatts (10) befindet.

15. Windturbinenblatt (10) gemäß Anspruch 10,
wobei der metallische Blitzempfänger eine stabile metallische Blattspitze umfasst.

16. Windturbinenblatt (10) gemäß Anspruch 1,
wobei das Spitzen-Ende (11) des Turbinenblatts (10) mit einem Material mit einer hohen Dielektrizitätskonstante gefüllt ist.

17. Windturbinenblatt (10) gemäß Anspruch 1,
wobei die Metallfolie (13, 13a, 13b, 13c) mit einer weiteren Ableitung einer Windturbine im Wurzelende (12) des Turbinenblatts (10) elektrisch verbunden ist.

## Revendications

1. Pale d'éolienne (10) pour une éolienne, comprenant:
une région d'extrémité de pointe (11) et une région d'extrémité de racine (12), et
un système de protection contre la foudre comprenant au moins une feuille de métal (13, 13a, 13b, 13c),
dans laquelle ladite feuille de métal (13, 13a, 13b, 13c) s'étend de façon continue à partir de la région d'extrémité de pointe (11) jusqu'à la région d'extrémité de racine (12) de la pale (10), et
dans laquelle la feuille de métal (13, 13a, 13b, 13c) est agencée dans le voisinage de la surface extérieure de la pale (10),
de telle sorte que la feuille de métal (13, 13a, 13b, 13c) soit apte à fonctionner comme un récepteur d'un impact de foudre et comme un conducteur de descente,
dans laquelle la pale d'éolienne (10) comprend au moins une semelle de longeron (17, 17a, 17b) qui s'étend à partir de la région d'extrémité de pointe (11) jusqu'à la région d'extrémité de racine (12) de la pale (10), dans laquelle la feuille de métal (13, 13a, 13b, 13c) s'étend le long de la direction longitudinale de la pale (10), et dans laquelle la feuille de métal (13, 13a, 13b, 13c) est disposée à l'extérieur de la semelle de longeron (17, 7a, 17b) et dans une direction radiale derrière la semelle de longeron (17, 17a, 17b) afin de protéger la semelle de longeron (17, 17a, 17b) contre un impact de foudre direct,
**caractérisée en ce que** la pale d'éolienne (10) comprend une couche de pale extérieure 14),
dans laquelle ladite couche de pale extérieure (14) s'étend entre la feuille de métal (13, 13a, 13b, 13c) et la semelle de longeron (17, 17a, 17b), et
dans laquelle la couche de pale extérieure (14) comprend au moins un élément d'équipotentialisation (18) pour établir une connexion électrique entre ladite feuille de métal (13, 13a, 13b, 13c) et ladite semelle de longeron (17, 17a, 17b).

2. Pale d'éolienne (10) selon la revendication 1, dans laquelle ladite au moins une feuille de métal (13, 13a, 13b, 13c) comporte une pluralité d'ouvertures (15).

3. Pale d'éolienne (10) selon la revendication 2, dans laquelle les ouvertures (15) définissent une structure en filet de la feuille de métal (13, 13a, 13b, 13c).

4. Pale d'éolienne (10) selon la revendication 3, dans laquelle la structure en filet de la feuille de métal (13, 13a, 13b, 13c) est orientée en diagonale à la direction longitudinale de la pale (10).

5. Pale d'éolienne (10) selon la revendication 1, dans laquelle la matière de la feuille de métal (13, 13a, 13b, 13c) comprend du cuivre.

6. Pale d'éolienne (10) selon la revendication 1, dans laquelle une pluralité de feuilles de métal (13, 13a, 13b, 13c) s'étendent le long de la direction longitudinale de la pale (10), et dans laquelle ladite pluralité de feuilles de métal (13, 13a, 13b, 13c) sont électriquement connectées les unes parmi les autres dans une direction transversale de la pale (10) afin de maintenir un équipotentiel entre les feuilles de métal (13, 13a, 13b, 13c).

7. Pale d'éolienne (10) selon la revendication 1, dans laquelle ledit au moins un élément d'équipotentialisation (18) s'étend dans la direction longitudinale de la pale (10) substantiellement sur la longueur de la semelle de longeron (17, 17a, 17b).

8. Pale d'éolienne (10) selon la revendication 1, dans laquelle une pluralité d'éléments d'équipotentialisation (18) sont agencés le long de la direction longitudinale de la pale (10).

9. Pale d'éolienne (10) selon la revendication 1, dans laquelle ledit au moins un élément d'équipotentialisation (18) comprend un conducteur électrique continu (19) pour établir la connexion électrique entre la feuille de métal (13, 13a, 13b, 13c) et une semelle de longeron (17, 17a, 17b), et dans laquelle ledit conducteur électrique continu (19) présente une première région de contact (20) avec la feuille de métal (13, 13a, 13b, 13c) et une deuxième région de contact (21) avec la semelle de longeron (17, 17a, 17b), la première région de contact (20) et la deuxième région de contact (21) étant en connexion électrique directe au moyen du conducteur électrique continu (19).

10. Pale d'éolienne (10) selon la revendication 1, comprenant au moins un récepteur de foudre métallique (22, 23, 24), dans laquelle ledit au moins un récepteur de foudre métallique (22, 23, 24) est situé à la région d'extrémité de pointe de pale (11) ou sur la surface de pale, et dans laquelle la feuille de métal (13, 13a, 13b, 13c) est connectée électriquement audit récepteur de foudre métallique (22, 23, 24).

11. Pale d'éolienne (10) selon la revendication 10, dans laquelle le récepteur de foudre métallique (22, 23, 24) comprend un disque de réception (25a, 25b), ledit disque de réception (25a, 25b) étant situé à la région d'extrémité de pointe de pale (11) et étant intégré dans la pale (10).

12. Pale d'éolienne (10) selon la revendication 10, dans laquelle le récepteur de foudre métallique (22, 23, 24) comprend deux disques de réception opposés (25a, 25b), lesdits deux disques de réception opposés (25a, 25b) étant électriquement et mécaniquement connectés par des moyens de connexion (26).

13. Pale d'éolienne (10) selon la revendication 10, comprenant une plaque de base (27), dans laquelle ladite plaque de base (27) est située à l'intérieur de la pale (10), et dans laquelle une pluralité de disques de réception (25a, 25b) sont montés sur la plaque de base (27).

14. Pale d'éolienne (10) selon la revendication 10, dans laquelle le récepteur de foudre métallique comprend une tige de réception, ladite tige de réception étant située à la région d'extrémité de pointe (11) de la pale (10).

15. Pale d'éolienne (10) selon la revendication 10, dans laquelle le récepteur de foudre métallique comprend une pointe de pale métallique massive.

16. Pale d'éolienne (10) selon la revendication 1, dans laquelle la région d'extrémité de pointe (11) de la pale (10) est remplie d'une matière qui présente un coefficient diélectrique élevé.

17. Pale d'éolienne (10) selon la revendication 1, dans laquelle la feuille de métal (13, 13a, 13b, 13c) est connectée électriquement à un conducteur de descente supplémentaire d'une éolienne à la région d'extrémité de racine (12) de la pale (10).
